Europäisches Patentamt

European Patent Office

Office européen des brevets

(11) Publication number: **0 202 826**
**B1**

# EUROPEAN PATENT SPECIFICATION

(45) Date of publication of patent specification: **28.11.90**

(21) Application number: **86303516.8**

(22) Date of filing: **08.05.86**

(51) Int. Cl.⁵: **B 01 J 19/20,** C 08 G 2/10, C 08 G 2/18

(54) **Continuous manufacturing of polymers or copolymers of trioxane.**

(30) Priority: **13.05.85 JP 101029/85**

(43) Date of publication of application:
**26.11.86 Bulletin 86/48**

(45) Publication of the grant of the patent:
**28.11.90 Bulletin 90/48**

(84) Designated Contracting States:
**BE DE FR GB IT NL**

(56) References cited:
**DE-A-3 020 086**
**DE-A-3 040 049**
**FR-A-2 214 719**
**GB-A-1 189 097**
**US-A-4 390 684**

(73) Proprietor: **POLYPLASTICS CO. LTD.**
**30 Azuchimachi 2-chome**
**Higashi-ku Osaka-shi (JP)**

(72) Inventor: **Minamisawa, Tsuyoshi**
**36-6, Kamo**
**Mishima-shi Shizuoka (JP)**
Inventor: **Chino, Shuichi**
**885-11, Miyajima**
**Fuji-shi Shizuoka (JP)**
Inventor: **Goto, Noboru**
**460-5, Aoki**
**Fujinomiya-shi Shizuoka (JP)**
Inventor: **Nakamura, Masaaki**
**885-11, Miyajima**
**Fuji-shi Shizuoka (JP)**

(74) Representative: **Livsey, Gilbert Charlesworth Norris et al**
**HYDE, HEIDE & O'DONNELL 10-12 Priests Bridge London SW15 5JE (GB)**

Courier Press, Leamington Spa, England.

## Description

The present invention relates to an apparatus and a method for the continuous manufacture of polymers or copolymers of trioxane. More particularly, it pertains to an improvement in the method of and apparatus for the continuous manufacture of fine granular polymers of trioxane, with copolymerizable comonomers, having trioxane as their major reactant, using a polymerization reaction apparatus of the so-called continuous stirrer-mixer type having two contra-rotating parallel shafts with a large number of paddles mounted on each and a barrel placed in proximity to the peripheries of said paddles.

In general, one of two phenomena occurs when polymerizable liquid monomers are polymerized in the presence of some appropriate polymerization catalyst. In the first, the polymers formed are soluble in monomers, so they form a viscous liquid, producing a highly viscous material as the polymerization proceeds. In the second, the polymers are insoluble in monomers, so they undergo phase changes, as polymerization proceeds, from a liquid, through the slurry state, to a fully solid state of polymers which are deposited. This invention relates to the latter reaction type. As a typical example of continuous manufacture of solid polymers by such a polymerization reaction, the manufacture of polyacetal resins may be considered.

The method of manufacturing polyacetal resins by the homopolymerization of trioxane with cyclic ethers, such as ethylene oxide, etc., or cyclic formals, etc., using cationic active polymerization catalysts such as boron trifluoride, phosphorus pentafluoride, tin tetrachloride and perchloric acid or their salts or complex salts, etc., is already well-known and used in industry. In this polymerization or copolymerization reaction, as described above, the liquid monomers undergo so-called phase changes as polymerization proceeds; from the liquid monomer state through a slurry state of short duration to the solid polymer state. Moreover, in the so-called block polymerization process in which almost no diluent is present, the rate of reaction is very high and, therefore, the phase changes are of a sudden and drastic nature, preventing easy control. For example, if the polymerization or copolymerization reaction is performed in a stationary state, large, lumpy, tough products will be obtained in a short time or almost instantaneously, resulting in great handling difficulties in the later grinding, cleaning and refining steps and the internal accumulation of heat from the polymerization reaction makes temperature control almost impossible, causing a deterioration of polymer quality and a reduction in the polymerization conversion rate. In this light, numerous proposals have been made for producing at high efficiency fine granular polymer products which are relatively stabilized in quality by preventing the production of large block polymerization products, taking into account the reaction characteristics. A basic idea common to these proposals is in the utilization of polymerization reactors of the extruder construction type having two parallel shafts for stirring.

With regard to the idea of utilizing reactors of the extruder construction type having two parallel shafts for the manufacture of polyacetal resins, inspired by inventions based on the use of extruders of the two shaft screw type of Published Japanese Patent Specifications Nos. 629/1972 and 42145/1972 and subsequently, another invention comprising utilization of a two shaft mixer composed of a combination of screws and elliptical plate shaped paddles which appeared in Published Japanese Patent Specification No. 84890/1976. Numerous ingenious modifications and improvements have been made in the paddle shape, as witnessed by successive proposals disclosed in Published Japanese Patent Specifications Nos. 86794/1978, 38313/1981 or 32619—21/1983. There is available a type in which two parallel shafts turn in the same direction and another type in which they turn in opposite directions (contra-rotation). Both show similar functions, but the former is characterized by the property of excellent self-cleaning, while with regard to the latter, an inventive proposal has been made, as in Published Japanese Patent Specification No. 40520/1982, that shearing forces are developed in the desired directions corresponding to the phase changes. Published Japanese Patent Specification No. 59824/1981 (DE—A—3040049) discloses such an apparatus having a stepwise arrangement of paddles along each shaft whereby the transportability of the reaction mixture becomes progressively smaller from the feed end to the discharge end of the apparatus. It describes paddles having the shapes of a convex lens, an ellipse, or a quasi-polygon inscribing a phantom circle at each vertex. Its description is direction to shafts which rotate in the same direction about the axis of the respective barrel casing within which they are housed. At present, most of the industrial production of polyacetal resin is carried out by manufacturing methods based on such inventions.

Because of increasing demands for high quality polyacetal resin, especially for good heat stability, the present methods of manufacturing are not fully satisfactory. Thus there is a demand for greater polymer yield of polymerization conversion rate per unit apparatus and furthermore, amelioration and improvement through increased efficiency of stabilizing treatments. When polyacetal resin is manufactured, using parallel two shaft rotary stirring reactors based on the aforementioned proposals, and by applying various ingenious designs to the shape and arrangement of paddles mounted on the rotational shafts, relatively fine granular polymers are obtained at high conversion rates in small scale apparatuses such as for use in laboratories. However, with increasing sizes of apparatus, satisfactory results have not always been achieved. The yield of large grain size polymers which should be called coarse granules since they have sizes as large as or larger than a little finger, rather than fine granules, grows and the thickness of the polymer scale layer which is deposited on the internal wall surface of the apparatus increases; as a result, a situation develops due to the decline in heat transfer efficiency in which to some extend a reduction in the polymerization conversion rate and a degradation in polymer quality are unavoidable.

This is especially so when the bulk (co)polymerization of trioxane is performed at a very high reaction rate and the polymers so formed are insoluble in the monomers; therefore, as the polymerization reaction proceeds, an abrupt change from a slurry to a solid state takes place, resulting in the formation of large blocks of formed polymer particles; then, the overall temperature of the polymer rises due to the internal storage of reaction heat, causing decomposition of the polymers and so leading to a reduction in quality. If the polymers can be finely granulated at the polymerization step, this decomposition is inhibited as the storage of heat from the polymerization reaction is averted; as a result, the polymerization yield is upgraded; the fall in the degree of polymerization is slight and the production rate of unstable copolymer products is small; for this reason, subsequent steps are greatly retrenched and the successful manufacture of trioxane (co)polymers of a high quality is anticipated. However, the aforementioned inventions still have various shortcomings.

In apparatus of the type involving two parallel shafts which are turned in the same direction, no nipping-in between paddles takes place, resulting in an insufficient fine granulation effect and inadequate mixing of the reactants. The large power requirement is also inhibiting.

In apparatus of the type using lens-shaped paddles or pseudo-triangular paddles which have hitherto been in use, with contra-rotating shafts, the aforementioned difficulties may be momentarily eliminated, when the distance between paddles is at a minimum, but at other times, the shafts rotate with large clearances, and so there exists a high probability that polymers will form into large blocks.

There was a further problem in that scale tended to be deposited on the inside wall surface of the barrel. For the elimination of such a difficulty, paddles provided at their tips with sharp scrapers which tuned in the same direction were proposed (Published Japanese Patent Specifications Nos. 383131/1981 and 3262/1983); in such a construction, scraping beyond the clearance which has been set between the paddle tips and the inside wall was impossible. This was since, in large capacity reaction apparatus, it was impossible to reduce this clearance to a predetermined value by way of machining or because the paddles, the inside wall surface or the two mated paddles came into contact with one another. Thus this paddle offered an unsatisfactory means of scale removal, but no other effective remedies were available.

The invention has arisen as the result of studies on the fine granulation of polymers in the polymerization step, especially with reference to the shapes of the paddles.

The present invention starts out from the provision of apparatus and a method for the continuous manufacture of polymers or copolymers of trioxane using a continuous stirring-mixing apparatus composed of two mutually parallel rotational shafts, with a large number of paddles mounted on each, and a drum formed by two intersecting cylindrical barrels each having an internal wall surface as described by the circular circumference traced during the rotation by the outer peripheries of respective pairs of paddles, the said drum thus having a cross-section in the shape of two circles concentric with the rotational axes of the two shafts and said apparatus being provided with a jacket for temperature control on the outer periphery of the drum, in which apparatus polymerization or copolymerization reactions are carried out, while stirring a mixture of trioxane, catalyst, other copolymerizable comonomers (as may be the case), and additives, by rotation of the aforementioned shafts in mutually opposing directions, the mixture being continuously fed through supply port means located at one end thereof, and the fine granules of polymers or copolymers so formed being removed through discharge port means located at the other end.

From this starting point the apparatus, as well as the method, of this invention is characterized in that on the contra-rotating shafts there are disposed one or more sets of paddles each having a lobed shape, with a pseudo-circular of pseudo-elliptical periphery and each mounted in a position offset from the axial centre of the circular inside wall surface of the respective barrel, which shape and mounting meet the requirements that when the set of paddles which are disposed opposite one another, one one each shaft, are contra-rotated the clearance between each set of paddles is always kept at less than 3% of the inner diameter of the barrel, and that the clearance between the part of each paddle farthest from the rotational axis of that paddle and the inside wall surface of the barrel is always kept at less than 3% of the said barrel inner diameter.

In the following, the reaction apparatus used for exercising the method of this invention and particularly, the paddle sets by which this invention is characterized will be described in detail with reference to the accompanying drawings.

FIGURE 1 is a schematic plan view of the reaction apparatus used in exercising the method of this invention:

FIGURE 2 (1), (2) and (3) are schematic sectional views of the reaction apparatus, as it is rotated through right angles about its axial direction; and

FIGURE 3 (1) and (2) are figures illustrating a design of the sectional configuration of a paddle which satisfies the requirement of this invention.

In the drawings, 1 is a barrel, 2 is a rotational shaft, is a paddle and 4 is an insulating jacket.

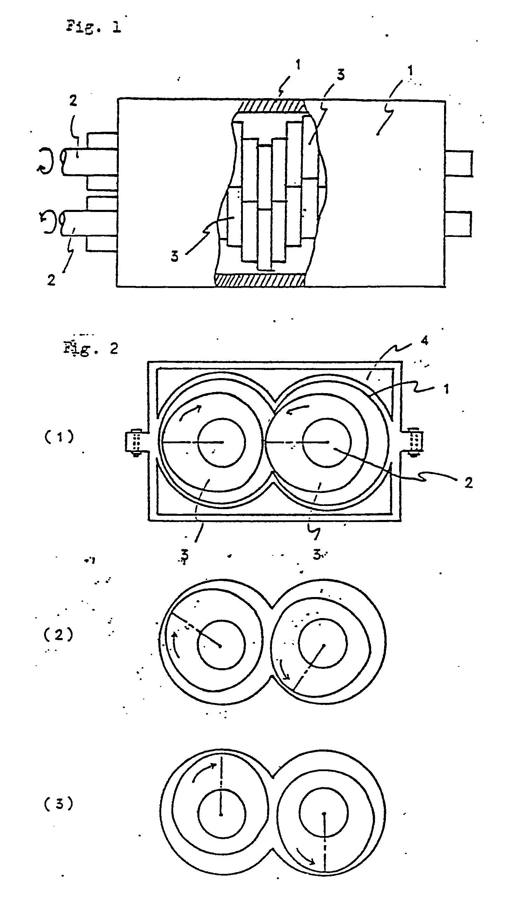

Figure 1 is a schematic plan view of the reaction apparatus used in exercising the method and apparatus of this invention, the broken part showing the positions of the shafts and the paddles. In the reaction apparatus, two rotational shafts 2 and 2' are placed parallel to each other in a barrel 1 having a cross-section in the shape of two circles overlapping each other and on each of these two rotational shafts, large numbers, for example at least thirty, of the paddles 3 are mounted. Of these paddles, most may be discs; however one or more sets of co-operating paddles are given lobes so as to have psuedo-circular or pseudo-elliptical external peripheries as will be described below. If desired, most of the co-operating pairs of the paddles may be lobed paddles.

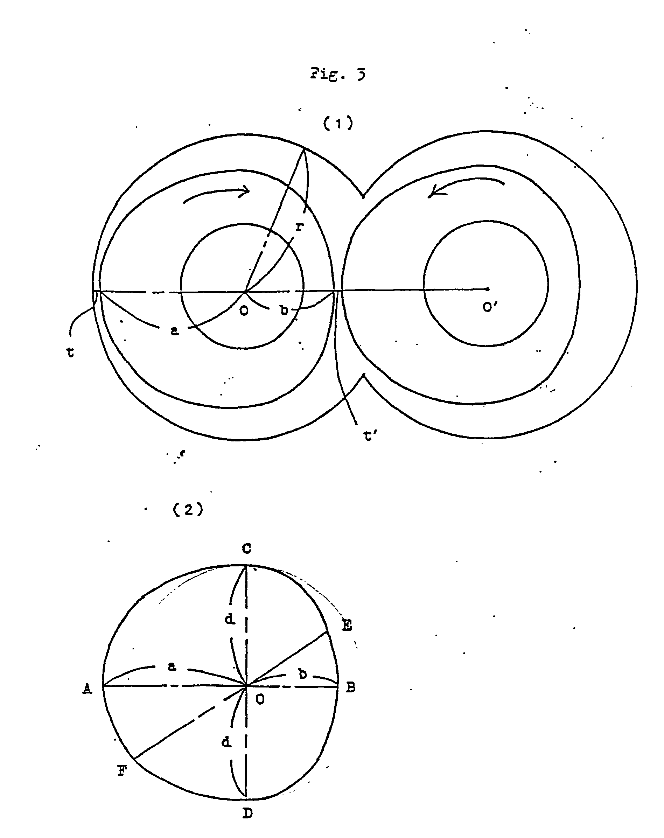

Figure 2 is a schematic sectional view taken at a right angle to the axial direction, showing the changes of positions of respective lobed paddles in (1), (2) and (3), when the one set of opposing paddles 3 make turns in different directions.

Figures 3 (1) and (2) illustrate a design of the sectional shape of a lobed paddle which satisfies the requirements of this invention.

Thus the lobed paddle used according to this invention is characterized in that, as illustrated in figure 2, paddles having the peripheral shape of a pseudo-circle or pseudo-ellipse are each mounted in a position offset from the axial centre of the circular inside wall surface of the barrel 1 and this apparatus is so designed that a substantially constant clearance t is kept between the inner wall surface of the barrel 1 and the farthest part from the rotational axis of the paddle 3 and that the paddles facing each other are allowed to turn in different directions with a substantially constant narrow clearance t' kept between them.

A particular example of a paddle shape which satisfies such requirements is now described with reference to figures 3 (1) and (2).

If it is assumed that the distance from the axial centre O of the shaft 2 to the farthest part of the paddle 3 is a, the distance from the axial centre O to the nearest peripheral part of the paddle 3 is b, the clearance between the barrel 1 and the farthest part of the paddle 3 is t, the clearance between paddles 3 is t', the internal radius of the barrel 1 is r, and the distance between the axial centres O and O' is c, then: $a = r - t$ and $b = c - a - t'$.

Here, making $t = t'$ is expedient on a design basis. Assuming $t = t'$, then $b = c - r$.

Then draw a straight line intersecting the line O—O' at a right angle and passing the axial centre O and on said straight line, points C and D are determined as defined by

$$d = \frac{a + b}{2} = \overline{CO} = \overline{DO}.$$

Then draw a semi-ellipse CBD, with CD ($= a + b$) as its long diameter and $2 \times \overline{OB}$ ($= 2b$) as its short diameter. Next, take a point F at a distance of $\overline{EF} = a + b$ from an arbitrary point E on this semi-ellipse along a line passing the axial centre O. Then the shape of the other half CAD will be determined by drawing the locus of the point F. In this way, the shape of the paddle section CADB is determined. This shape is symmetrical relative to the line AB and the clearance between the opposing paddles can always be kept at a substantially constant narrow value $t' = t$, when the two shafts are rotated in opposite directions.

The paddle shape of this invention is, of course, not restricted to the above mentioned design example, but may also include such shapes in which $t \neq t'$ or CBD is not exactly semi-elliptical.

According to this invention, the clearance between the opposing paddles need not always be exactly constant, but the object of this invention will always be achieved, if the clearance is always kept at less than 3% of the barrel ID (the internal diameter of the cylindrical wall of the barrel) and any deviations from the sectional shape of the paddle of figure 3 within this range are permissible. In any case, the essential requirements are that the two shafts shall turn in mutually opposing directions, while always keeping to within 3% of the barrel ID the clearance between opposing paddles and the clearance between the farthest part of the paddles and the inside wall of the barrel and the clearances should desirably not be in excess of 10 mm, even if the apparatus has been scaled up to whatever degree. The preferred size of the clerance should be less than 2% of the barrel ID and less than 5 mm.

The clearance between the side of a paddle and the side of another paddle adjacent thereto and facing it should also be less than 3% of the barrel ID and less than 10 mm, or preferably, less than 2% of the barrel ID and less than 5 mm.

The sectional shape of the lobed paddle as mentioned above is generally satisfactory, but forming part or whole of its surface to have fine serrations or gear teeth or undulations is also effective for the fine granulation of the polymer.

Furthermore, the paddle arrangement may be such that the neighbouring paddles, as arbitrarily combined, will have an angle made by their long diameters of 180°, 90°, 45° or −45°, etc. By appropriately selecting the angle made by the neighbouring paddles, the proper effect of steering or stagnation of the contents may be achieved and thereby its fine granulation may be made more effective through control of the filling rate in each part.

Further conditions to note in the design of the apparatus of this invention are how to set the inter-axial distance (c) relative to the barrel ID (2r) which should desirably be set in the range inter-axial distance (c) of $1.3r \leqslant c \leqslant 1.8r$.

If the reaction is carried out with the reaction apparatus in its installed state having such a gradient that the axis of the reaction apparatus is inclined at an angle of 10° or more to the horizontal, preferably upwardly towards the discharge end of the apparatus, this is effective in preventing the phenomenon of pulsation of the flow of products from the mixture feed to the polymer discharge, thus stabilizing the operation and equalizing the polymer quality.

In exercising the method of this invention, a mixture of trioxane, catalyst, comonomers, as desired, and other additives, etc., is continuously supplied and the rotational shafts are contra-rotated so as that they turn towards each other in the upper half of the reactor, while the reaction temperature is controlled by means of a jacket provided outside the barrel or by passing some heating medium into or through the rotation shafts, whereby the polymerization or the copolymerization of trioxane is performed continuously.

In the case of copolymerization, well known comonomers which are employed for copolymerization of trioxane, such as ethylene oxide, 1,3-dioxolane, dioxepane, 1,4-butanediol formal and other cyclic formals, etc., are applicable.

As polymerization catalysts, all well known cationic polymerization catalyzers which are used for polymerization or copolymerization of trioxane are applicable, those mentioned preferably including boron trifluoride, coordination compounds of boron trifluoride and ether, trifluoromethane sulphonic acid, etc.

The addition of other appropriate molecular weight adjustors and other additives is also permissible.

The temperature of the heating medium in the reaction apparatus jacket should be in the range of 60°C—120°C, preferably 60°—110°C. In order to maintain the internal temperature at optimum values corresponding to the heating conditions in every part of the apparatus, it is possible and also desirable to locally alter the jacket temperature.

By this invention, it is possible to limit the temperature of the reaction to a desirable level. Based on the effects of this invention which are described below, it has been ascertained that improvements have been made over the conventional method both in yield and quality.

Results of the Invention

Each opposing pair of paddles of this invention always maintain a small clearance between them and are contra-rotated, so as to be turned inwardly towards each other at the top, and moreover, they are designed to rotate with a small clearance kept between the paddles and inside wall surface; for these reasons, by arranging paddles in such a way that the material mixture is treated by these paddles at the slurry state stage during the polymerization it is almost impossible to form polymers in large blocks. Since it produces few large block polymers, the product polymer of this operation requires little further reduction of particle size, eg by grinding.

The paddles of this invention also reduce the deposit of polymer scale on the inside wall surface of the barrel, thereby effecting improvement in the self-cleaning property. The reason for this is that the sectional shape of the paddle of this invention has a large curvature; therefore, at the clearance between the paddles and the barrel, the contact area between the paddles and polymers is large and, accordingly, the contact resistance between the paddles and polymers is large, as a result, the scale adhering to the inside wall surface is scraped off by the polymers interposed between the paddles and the barrel. This prevention of polymer scale deposition is very important for a system involving block polymerization such as this reaction system, in which the polymerization reaction is rapid and removal of reaction heat difficult, since this effect will not only prevent decomposition by promoting heat removal from the polymer with enhanced heat transfer efficiency, thereby contributing to upgrading of quality, but it will lead to an increase in the polymerization rate.

As described above, the reaction apparatus used according to this invention, first, prevents the agglomeration of polymers at the polymerization stage and the accumulation of polymerization heat inside the particles by the fine granulation and, secondly, enhances the heat removal efficiency of the whole of the reaction system by preventing deposition of polymer scale on the inside wall surface, thereby contributing to control of polymer temperature at the required level; consequently, decomposition of polymers is prevented, for the benefit of upgrading of polymerization yield and polymerization degree and in copolymerization, the proportion of the unstable part is reduced to alleviate the burden in the later stabilizing step; in that way, great effects will be attained in improvement of quality.

In the following, this invention is described in connection with an embodiment thereof, Example 1, but is not limited to that embodiment. Example 2 which is outside the scope of this invention, is given for purposes of comparison.

Example 1

The continuous polymerization of trioxane was carred out, using a reaction apparatus with paddles having a cross-sectional shape given by the numerical representations of the dimensions indicated in figure 3 (2): a = 73.5 mm, b = 49.5 mm and d = 61.5 mm.

In a barrel formed of two intersecting cylinders each with an ID of 150 mm, thirtyeight paddles are mounted on each of two shafts. The offset disc or lobe shaped paddles used according to this invention are arranged between the 18th and the 28th paddles, as counted from the feed port end, with adjoining paddles all shifted or offset by 90° relative to one another in the direction of rotation. In other locations, lens shape paddles used, and paddles having forward and reverse flow inducing means are interposed in appropriate positions. The paddles are installed such that a clearance of about 3 mm is maintained from the inside wall surface of the barrel and that a clearance of about 3 mm is also maintained between opposing paddles.

From the feed port, trioxane (100 parts by weight/hr) containing 2.5% by weight of ethylene oxide and 50 ppm (based on the monomer) of boron trifluoride were fed and warm water at 60°C was passed through the jacket. The paddles were turned at 36 rpm in contra-rotation so as to be turned inward at the top and the stagnation time was approximately 2.3 min. The solid granular matter obtained through the discharge port contained 20% unreacted trioxane, the mean particle diameter $D_p o$ determined by the particle size distribution in the Rosin-Rammlar chart being 1.6 mm, and the particle diameters larger than 4 mm (5 meshes) being 3%.

The reaction was stopped by treating the system with a 0.1% aqueous solution of ethylamine, immediately after the polymers were discharged through the discharge port. The polymers after being filtered were cleaned with hot water and acetone, followed by drying. The proportion of the unstable part produced by the process of alkali hydrolysis of the polymers was 1.2%, and the melt-index value was 5.0. Observation of the inside of the reaction apparatus after completion of the operation showed only thin local deposition of polymer scale on parts of the inside wall surface opposite the locations where the eccentric disc shape paddles of this invention are arranged.

Example 2

The polymerization reaction was performed in a similar manner to Example 1, but using lens-shaped paddles (the clearance between the tips of the paddles and the inside wall surface was 3 mm) in place of the eccentric disc or lobed paddles of this invention used in Example 1. The stagnation time was 2.5 min, nearly the same as in the case of Example 1.

The polymers obtained through the discharge port in Example 2 contained 28% trioxane, the mean particle diameter $D_p o$, as determined by the particle size distribution in the Rosin-Rammelar chart, was 2.4 mm and particle diameters giving larger than 4 mm (5 meshes) being 12%. The proportion of the unstable part obtained by alkali hydrolysis of the polymers was 1.7% and the value of the melt index was 6.8.

And after completion of the operation, observation of the inside of the reaction apparatus revealed deposition of polymer scale approximately 3 mm thick over nearly all of the inside wall surface.

Claims

1. Apparatus for continuously manufacturing a polymer or copolymer of trioxane which comprises:

two mutually parallel contra-rotational shafts,

a large number of paddles mounted on each shaft,

a drum formed by two intersecting cyclindrical barrels each of which houses one of the shafts and the paddles mounted thereon such that the drum has a cross-section in the shape of two circles concentric with the respective rotational axes of the two shafts, which circles overlap each other,

a temperature-controlling jacket,

supply port means located at one end of the apparatus for continuously feeding a material mixture of trioxane, catalyst and, as the case may be, other copolymerizable comonomers and additives, the material mixture being subjected to a polymerization or copolymerization reaction while being mixed and stirred by turning the shafts in opposite directions to each other,

discharge port means located at the other end of the apparatus for the removal of the polymer or copolymer of trioxane in the form of fine granules,

characterized in that one or more sets of opposite lobed paddles are mounted on the shafts, each lobed paddle having the peripheral shape of a pseudo-circle or pseudo-ellipse and each being mounted in a position offset from the axial centre of the inside wall surface of the respective barrel such that when a pair of lobed paddles facing each other are turned in opposite directions around their rotational axes, a substantially constant clearance always less than $3/100$ of the barrel internal diameter is maintained between them and a clearance always less than $3/100$ of the barrel internal diameter is maintained between the inside wall of the barrel and the farthest part of the periphery of each lobed paddle from the rotational axis.

2. Apparatus according to claim 1, in which each lobed paddle has a sectional shape produced by drawing a semi-ellipse having as its long diameter a length a + b bisected at its centre by the rotational axis of the lobed paddle and having as its short diameter a distance $2 \times b$ and, using this semi-ellipse as the locus of one end of a straight line of length a + b passing through the rotational axis, drawing the shape described by the other end of the straight line (where a is the distance of the farthest point on the periphery of the lobed paddle from its rotational axis and b is the distance of the shortest point on the periphery of the lobed paddle from its rotational axis).

3. Apparatus according to claim 1 wherein part or the whole of the peripheral surfaces of the lobed paddles is provided with fine serrations, teeth or undulations.

4. Apparatus according to any one of claims 1 to 3 wherein there are at least thirty paddles arranged longitudinally on each shaft, and wherein at least two of the paddles on each shaft are lobed paddles.

5. Apparatus according to claim 4, wherein in the case of adjacent lobed paddles on a shaft, the lobes of the neighbouring paddles are offset by at least 45°, preferably 90°, to one another in the direction of rotation of the shaft.

6. Apparatus according to any one of claims 1 to 5 wherein the axis of the shafts are inclined upwardly towards the discharge end of the apparatus, by an angle to the horizontal of up to 10°.

7. A method of continuously manufacturing polymers or copolymers of trioxane using a continuous stirring — mixing apparatus according to any one of claims 1 to 7.

8. A method of continuously manufacturing polymers or copolymers of trioxane according to claim 8, wherein the temperature-controlling jacket is heated by a liquid medium such that the interior of the drum is maintained at a temperature of 60°C—110°C.

**Patentansprüche**

1. Apparatur zur kontinuierlichen Herstellung eines Polymers oders Copolymers von Trioxan, umfassend zwei parallel zueinander gegensinnig rotierende Wellen, eine große Zahl von Rührblättern, die an jeder Welle befestigt sind,

eine Trommel, die aus zwei einander schneidenden Hohlkörpern, von denen jeweils einer eine der Wellen und die an diesen befestigten Rührblätter beherbergt, in der Weise gebildet wird, daß die Trommel einen Querschnitt in Form zweier einander überlappender Kreise hat, die konzentrisch mit den jeweiligen Rotationsachsen der beiden Wellen sind;

einen temperatur-gesteuerten Mantel;

Zuführungs-Anschlußmittel an einem Ende der Apparatur zum kontinuierlichen Einspeisen eines Material-Gemischs aus Trioxan, Katalysator und gegebenenfalls anderen copolymerisierbaren Comonomeren und Additiven, wobei das Material-Gemisch einer Polymerisations- oder Copolymerisations-Reaktion unterworfen wird, während es durch Drehung der Wellen in einander entgegengesetzten Richtungen vermischt und gerührt wird,

Austragungs-Anschlußmittel am anderen Ender der Apparatur zum Entfernen des Polymers oder Copolymers des Trioxans in Form eines feinen Granulats, dadurch gekennzeichnet, daß ein Satz oder mehrere Sätze gegenüberliegender gelappter Rührblätter an den Wellen befestigt sind, wobei jedes gelappte Rührblatt die Umfangs-Form eines Pseudo-Kreises oder einer Pseudo-Ellipse hat und jeweils in einer Position befestigt ist, die gegenüber dem Achsenzentrum der Oberfläche der Innenwand des jeweiligen Hohlkörpers derart versetzt ist, daß dann, wenn ein Paar einander gegenüber stehender gelappter Rührblätter in einander entgegengesetzten Richtungen um ihre Rotationsachsen gedreht werden, ein im wesentlichen konstanter Abstand von stets weniger als $^3/_{100}$ des Innendurchmessers des Hohlkörpers zwischen ihnen eingehalten wird und ein Abstand von stets weniger als $^3/_{100}$ des Innendurchmessers des Hohlkörpers zwischen der Innenwand des Hohlkörpers und dem am weitesten entfernten Teil des Umfangs jedes gelappten Rührblattes von der Rotationsachse eingehalten wird.

2. Apparatur nach Anspruch 1, worin jedes gelappte Rührblatt eine Schnittform besitzt, die erhalten wird durch Zeichnen einer Semi-Ellipse, die als ihren langen Durchmesser eine Strecke a + b, zweigeteilt in ihrer Mitte durch die Rotationsachse des gelappten Rührblattes, und als ihren kurzen Durchmesser eine Strecke 2 × b aufweist, und unter Benutzung dieser Semi-Ellipse als Ort des einen Endpunkts einer geradlinigen Strecke der Länge a + b, die durch die Rotationsachse verläuft, durch Zeichnen der durch das andere Ende der geradlinigen Strecke beschriebenen Form (worin a der Abstand des am weitesten herausragenden Punktes des Umfangs des gelappten Rührblattes von seiner Rotationsachse ist und b der Abstand des am wenigsten weit entfernten Punktes des Umfangs des gelappten Rührblattes von seiner Rotationsachse ist).

3. Apparatur nach Anspruch 1, worin die Umfangsoberflächen der gelappten Rührblätter zum Teil oder vollständig mit feinen sägezahnartigen Einkerbungen, Zähnen oder gewellten Profilen versehen sind.

4. Apparatur nach irgendeinem der Ansprüche 1 bis 3, worin wenigstens 30 Rührblätter auf jeder Welle in Längsrichtung angebracht sind und worin wenigstens zwei der Rührblätter auf jeder Welle gelappte Rührblätter sind.

5. Apparatur nach Anspruch 4, worin im Fall einander benachbarter gelappter Rührblätter an einer Welle die Lappen der benachbarten Rührblätter um wenigstens 45°, und vorzugsweise um 90°, in Drehrichtung der Welle gegeneinander versetzt sind.

6. Apparatur nach irgendeinem der Ansprüche 1 bis 5, worin die Achse der Wellen nach oben in Richtung auf das Austrags-Ende der Apparatur gegen die Horizontale unter einem Winkel bis zu 10° geneigt ist.

7. Verfahren zur kontinuierlichen Herstellung von Polymeren oder Copolymeren von Trioxan unter Verwendung einer Apparatur zum kontinuierlichen Rühren-Vermischen nach irgendeinem der Ansprüche 1 bis 6.

8. Verfahren zur kontinuierlichen Herstellung von Polymeren oder Copolymeren von Trioxan nach Anspruch 7, worin der temperatur-gesteuerte Mantel durch ein flüssiges Medium so beheizt wird, daß das Innere der Trommel auf einer Temperatur von 60°C bis 110°C gehalten wird.

**Revendications**

1. Appareil pour fabriquer en continu un polymère ou copolymère du trioxanne, qui comprend:

deux arbres parallèles entre eux et tournant en sens contraires,

un grand nombre de palettes montées sur chaque arbre,

un tambour formé par deux corps cylindriques imbriqués qui logent chacun l'un des arbres et les palettes qui y sont montées, de telle façon que le tambour présente une section transversale ayant la forme de deux cercles concentriques aux axes de rotation respectifs des deux arbres, ces cercles se chevauchant l'un l'autre,

une chemise de réglage de la température,

un orifice d'alimentation situé à une extrémité de l'appareil pour l'introduction continue d'un mélange de trioxanne, de catalyseur et, les cas échéant, d'autres comonomères copolymérisables et additifs, le mélange de matières étant soumis à une réaction de polymérisation ou de copolymerisation tout en étant mélange et agité par la rotation des arbres en sens contraires,

un orifice d'évacuation situé à l'autre extrémité de l'appareil pour l'enlèvement du polymère ou copolymère de trioxanne sous la forme de grains fins,

caractérisé en ce qu'un ou plusieurs jeux de palettes lobées opposées sont montés sur les arbres, chaque palette lobée ayant la forme périphérique d'un pseudo-cercle ou d'une pseudo-ellipse et chacune étant montée dans une position déportée par rapport au centre axial de la surface de paroi intérieure du corps correspondant, de telle manière que, lorsque deux palettes lobées se faisant face tournent dans des sens contraires autour de leurs axes de rotation, un espacement sensiblement constant, toujours inférieur à $3/1000$ du diamètre interne du corps, soit maintenu entre elles et un espacement toujours inférieur à $3/100$ du diamètre interne du corps soit maintenu entre la paroi intérieure du corps et la partie de la périphérie de chaque palette lobée qui est la plus éloignée de l'axe de rotation.

2. Appareil selon la revendication 1, dans lequel chaque palette lobée présente une forme de section produite en dessinant une demi-ellipse dont le grand diamètre ayant une longueur a + b est divisé en son centre en deux parties égales par l'axe de rotation de la palette lobée et qui a pour petit diamètre une distance 2 × b et, en utilisant cette demi-ellipse comme lieu d'une extrémité d'un segment de droite de longueur a + b passant par l'axe de rotation, en dessinant la courbe décrite par l'autre extrémité de ce segment de droite (où a est la distance du point situé sur la périphérie de la palette lobée qui est le plus éloigné de son axe de rotation et b est la distance du point situé sur la périphérie de la palette lobée qui est le plus proche de son axe de rotation).

3. Appareil selon la revendication 1, dans lequel une partie ou la totalité des surfaces périphériques des palettes lobées comporte de fines cannelures, dents ou ondulations.

4. Appareil selon l'une quelconque des revendications 1 à 3, dans lequel il existe au moins trente palettes disposées longitudinalement sur chaque arbre, et dans lequel au moins deux des palettes de chaque arbre sont des palettes lobées.

5. Appareil selon la revendication 4, dans lequel, dans le cas de palettes lobées adjacentes montées sur un arbre, les lobes des palettes voisines sont décalés d'au moins 45°, de préférence de 90°, l'un par rapport à l'autre dans la direction de rotation de l'arbre.

6. Appareil selon l'une quelconque des revendications 1 à 5, dans lequel les axes des arbres sont inclinés d'un angle pouvant atteindre 10° par rapport à l'horizontale en s'élevant vers l'extrémité d'évacuation de l'appareil.

7. Un procédé pour fabriquer en continu des polymères ou copolymères de trioxanne en utilisant un appareil agitateur-mélangeur continu selon l'une quelconque des revendications 1 à 7.

8. Un procédé pour fabriquer en continu des polymères ou copolymères de trioxanne selon la revendication 8, dans lequel la chemise de réglage de température est chauffée par un milieu liquide de telle manière que l'intérieur du tambour soit maintenu à une température de 60°C à 110°C.

Fig. 1

Fig. 2

(1)

(2)

(3)

1

Fig. 3

(1)

(2)